# EUROPÄISCHE PATENTSCHRIFT

(11) **EP 2 273 646 B1**
(45) Veröffentlichungstag und Bekanntmachung des Hinweises auf die Patenterteilung: **08.01.2020**
(21) Anmeldenummer: 10182942.2
(22) Anmeldetag: 07.09.2000
(51) Int. Cl.: H02J 3/01, H02J 3/38, H02J 3/18

(54) **Verfahren zur Blindleistungsregelung sowie Vorrichtung zur Erzeugung elektrischer Energie in einem elektrischen Netz**
Method for reactive power compensation and apparatus for power generation in an electricity grid
Procédé pour la compensation de puissance réactive et dispositif de production d'énergie électrique dans un réseau électrique

(30) Priorität: 13.09.1999 DE 19943847; 27.04.2000 DE 10020635
(43) Veröffentlichungstag der Anmeldung: 12.01.2011
(62) Teilanmeldung aus: 05108809.4
(73) Patentinhaber: Wobben Properties GmbH, 26607 Aurich (DE)
(72) Erfinder: Wobben, Aloys, 26607 Aurich (DE)
(74) Vertreter: Eisenführ Speiser

(56) Entgegenhaltungen:
- WO-A1-96/19025
- US-A- 5 225 712
- US-A- 5 754 035
- NELSON R J: "TRANSMISSION POWER PLOW CONTROL: ELECTRONIC VS. ELECTROMAGNETIC ALTERNATIVES FOR STEADY-STATE SOPERATION", IEEE TRANSACTIONS ON POWER DELIVERY, IEEE SERVICE CENTER, NEW YORK, NY, US, Bd. 9, Nr. 3, 1. Juli 1994 (1994-07-01), Seiten 1678-1684, XP000485009, ISSN: 0885-8977, DOI: 10.1109/61.311194

## Beschreibung

Die Erfindung betrifft ein Verfahren zur Blindleistungsregelung in einem elektrischen Netz, bei welchem elektrische Leistung von einem, vorzugsweise vom Rotor einer Windenergieanlage angetriebenen, elektrischen Generator erzeugt und mit Hilfe einer zwischen Generator und Netz vorgesehenen Kompensationseinrichtung zur Kompensation von Blindleistung entsprechend moduliert wird. Die Erfindung betrifft ferner eine Vorrichtung zur Erzeugung elektrischer Energie in einem elektrischen Netz, mit einem, vorzugsweise vom Rotor einer Windenergieanlage angetriebenen, elektrischen Generator und einer zwischen Generator und Netz vorgesehenen Kompensationseinrichtung zur Kompensation von Blindleistung.

Viele am elektrischen Netz angeschlossene Verbraucher benötigen induktive Blindleistung. Zur Kompensation eines solchen induktiven Blindleistungsanteils können Kondensatoren verwendet werden, die auch als Phasenschieberkondensatoren bezeichnet werden, deren kapazitiver Blindwiderstand etwa so groß ist wie der induktive Blindwiderstand. Eine vollständige Kompensation der induktiven Blindleistung mit Hilfe von Phasenschieberkondensatoren ist in der Praxis gerade bei hohen Leistungsschwankungen aber nicht möglich. Ferner ist nachteilig, dass die benötigten Phasenschieberkondensatoren, die häufig zu sogenannten Kondensatorbatterien zusammengefasst sind, die im übrigen viel Platz benötigen, sich negativ auf die Stabilität des elektrischen Netzes auswirken.

Aus der US 5,225,712 ist ein Leistungskonverter für eine Windenergieanlage bekannt. Dabei sind Mittel vorgesehen, um einen gewünschten Blindleistungsfaktor der abgegebenen Leistung einzustellen. Als weiterer Stand der Technik wird hingewiesen auf WO 96/19025, US-A-5,754,035, sowie "Transmission power flow control: electronic vs. electromagnetic alternatives for steady-state Operation", R. J. Nelson, IEEE Transactions on Power Delivery, 9(1994)July, No. 3, New York, US.

Die Aufgabe der vorliegenden Erfindung besteht darin, die zuvor erwähnten Nachteile des Standes der Technik zu vermeiden und die Blindleistung in einem elektrischen Netz auf einfache Weise zu kompensieren.

Diese Aufgabe wird mit einem Verfahren mit dem Merkmal nach Anspruch 1 und einer Vorrichtung mit dem Merkmal nach Anspruch 8 gelöst.

Erfindungsgemäß wird mit Hilfe der Kompensationseinrichtung eine Blindleistung 'erzeugt', die in der Lage ist, die Blindleistung in dem Verbraucher zu kompensieren. Beispielsweise kann mit Hilfe der erfindungsgemäßen Kompensationseinrichtung ein kapazitiver Blindleistungsanteil erzeugt werden, der an den vom Verbraucher benötigten induktiven Blindleistungsanteil so angepasst ist, dass er den induktiven Blindleistungsanteil im Verbraucher im wesentlichen vollständig kompensiert. Der Vorteil der Erfindung besteht somit im wesentlichen darin, dass eine Regelung zur Verfügung gestellt wird, die insbesondere auf häufig auftretende hohe Leistungsschwankungen schnell reagiert, so dass die vollständige Blindleistungskompensation im wesentlichen erhalten bleibt. Demnach kann wahlweise induktive oder kapazitive Blindleistung in das elektrische Netz eingespeist werden, was erfindungsgemäß durch die Regelung der Kompensationseinrichtung realisiert wird.

Mit Hilfe der erfindungsgemäßen Regelung ist es dabei vorzugsweise auch möglich, dass die abgegebene elektrische Leistung eine Frequenz aufweist, die der Frequenz des Verbrauchers entspricht oder auch ein Vielfaches der Verbraucherfrequenz darstellt. Im ersteren Fall kann demnach Blindleistung mit der Frequenz des Verbrauchers oder der Netzfrequenz des elektrischen Netzes geliefert werden. Im letzteren Fall kann beispielsweise nach Wunsch Oberschwingungsblindleistung in das elektrische Netz eingespeist werden. Beispielsweise kann die fünfte Oberschwingung mit einer Frequenz von 250 Hz als kapazitive Oberschwingung in das Netz eingespeist werden. Diese kompensiert dann die Oberschwingungsblindleistung von elektrischen Verbrauchern, die an das elektrische Netz angeschlossen sind, wie beispielsweise Fernseher, Energiesparlampen usw..

Zweckmäßigerweise weist die Kompensationseinrichtung einen Wechselrichter auf, mit dem sich Phase, Amplitude und/oder Frequenz der Spannungs- und/oder Stromverläufe besonders einfach einstellen bzw. regeln lassen, um einen Blindleistungsanteil zu erzeugen, der geeignet ist, die Blindleistung in dem Verbraucher entsprechend zu kompensieren.

Vorzugsweise weist die Kompensationseinrichtung eine Messeinrichtung zur Erfassung der Spannungs- und/oder Stromverläufe im elektrischen Netz, vorzugsweise am Einspeisepunkt, auf. Bei einer Weiterbildung der Ausführung bei welcher die Kompensationseinrichtung einen Wechselrichter enthält, steuert die Kompensationseinrichtung in Abhängigkeit von den Messergebnissen der Messeinrichtung den Wechselrichter.

Die vom elektrischen Generator erzeugte Spannung wird vorzugsweise unter entsprechender Anpassung des Blindleistungsanteiles in der an den Verbraucher abgegebenen elektrischen Leistung im Wesentlichen auf einem vorgegebenen Sollwert geregelt. Dabei kann die Anpassung des Blindleistungsanteiles durch entsprechende Steuerung des Leistungsfaktors (cosϕ) oder der Phase des vom elektrischen Generator abgegebenen Stromes stattfinden. Wenn der elektrische Generator über eine Leitung und/oder einen Transformator an ein elektrisches Netz angeschlossen ist, wird zweckmäßigerweise die vom elektrischen Generator erzeugte Spannung so geregelt, dass deren Betrag in der Größenordnung des Betrages der Netzspannung liegt oder diesem entspricht. Dadurch werden unerwünscht hohe oder niedrige Spannungen generatorseitig vermieden. Üblicherweise ist die Netzspannung im Wesentlichen konstant, wenn es sich um ein im wesentlichen starres Netz handelt.

Nachfolgend werden bevorzugte Ausführungsbeispiele der Erfindung anhand der beiliegenden Zeichnungen näher erläutert. Es zeigen:
- Fig. 1 bis 4: verschiedene Spannungs- und Stromverläufe;
- Fig. 5: den Oberschwingungsanteil aus dem Stromverlauf von Fig. 4;
- Fig. 6: schematisch einen Netzausläufer, an dem eine Windenergieanlage und Verbraucher angeschlossen sind;
- Fig. 7: ein Ersatzschaltbild einer elektrischen Leitung;
- Fig. 8: ein Ersatzschaltbild eines elektrischen Netzes mit einem Transformator und einer elektrischen Freileitung (a), an die ein elektrischer Generator einer Windenergieanlage angeschlossen ist, sowie verschiedene Betriebszustände darstellende Zeigerdiagramme (b bis e);
- Fig. 9: ein schematisches Schaltbild einer Anordnung zur Kompensation von Oberschwingungsströmen in einer Stichleitung; und
- Fig. 10: ein schematisches Schaltbild einer Anordnung zur Kompensation von Oberschwingungsströmen in einem elektrischen Netz.

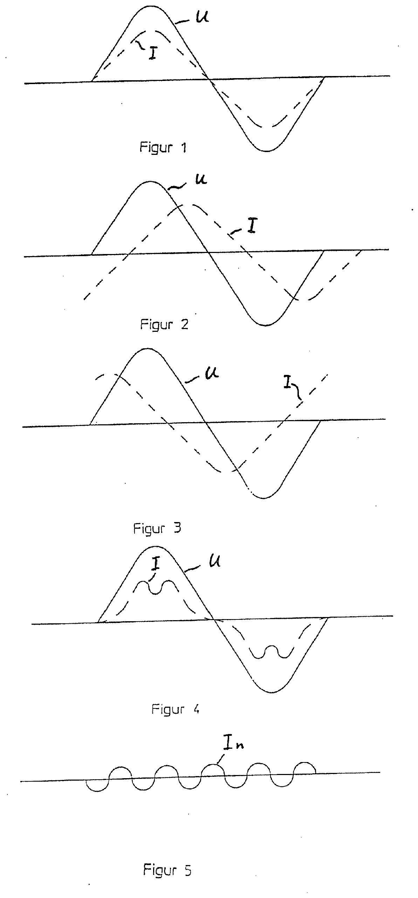

Das Auftreten von Grundschwingungsblindleistungen in einem elektrischen Netz ist schon sehr lange bekannt. Die Fig. 1 bis 3 zeigen verschiedene Spannungs- und Stromverläufe.

In Fig. 1 ist ein Fall dargestellt, in dem keine Blindleistung auftritt, d.h. Spannung U und Strom I sind nicht phasenverschoben. Der Strom eilt weder der Spannung vor noch nach. Es ist also keine Grundschwingungsblindleistung vorhanden.

Fig. 2 zeigt den Fall, in dem der Strom I zeitlich der Spannung U nacheilt. Hierbei wird induktive Blindleistung benötigt, was bei den meisten elektrischen Verbrauchern der Fall ist, da sie - wie beispielsweise Elektromotoren - Induktivitäten aufweisen.

Fig. 3 zeigt den Fall, in dem der Strom I zeitlich der Spannung U vorauseilt. Hierbei wird kapazitive Blindleistung benötigt.

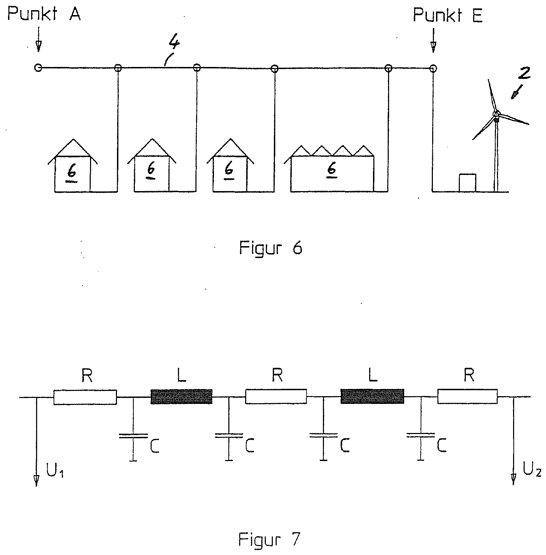

In Fig. 6 ist eine Anordnung dargestellt, bei welcher eine Windenergieanlage 2 an einem Netzausläufer angeschlossen ist. Vom Anfang (Punkt A) bis zum Ende (Punkt E) des Netzausläufers bzw. der elektrischen Leitung 4 sind Verbraucher 6 angeschlossen. Wenn die Windenergieanlage 2 nicht in das Netz einspeist, fällt die Spannung vom Anfang (Punkt A) bis zum Ende (Punkt E) der Leitung 4 immer mehr ab; die Spannung an dem Punkt E und diesem nächstliegenden letzten Verbraucher 6 ist somit kleiner als an dem Punkt A und dem diesem Punkt A nächstliegenden ersten Verbraucher 6 an dieser elektrischen Leitung 4. Wenn nun die Windenergieanlage 2 oder ein größerer Windpark am Ende der elektrischen Leitung 4 bei Punkt E in Fig. 6 angeschlossen wird und Strom in die elektrische Leitung 4 einspeist, steigt die Anschlussspannung am Punkt E der elektrischen Leitung 4 extrem an. Nun stellt sich die Situation umgekehrt als im Fall ohne am Ende der elektrischen Leitung 4 angeschlossener Windenergieanlage 2 dar.

Für den Fall, dass die elektrische Leitung als freie Leitung (kein Erdkabel) vorgesehen ist, stellt eine solche Leitung im Wesentlichen tatsächlich eine Induktivität dar. Demgegenüber stellen Erdkabel in der Regel eine gedämpfte Kapazität dar. Hierzu wird auf das in Fig. 7 dargestellte Ersatzschaltbild einer Leitung verwiesen.

Mit Hilfe einer Blindleistungsregelung an der Windenergieanlage kann die Spannung am Einspeisepunkt (Punkt E gemäß Fig. 6) geregelt werden. Hierzu wird vorzugsweise ein Wechselrichter verwendet.

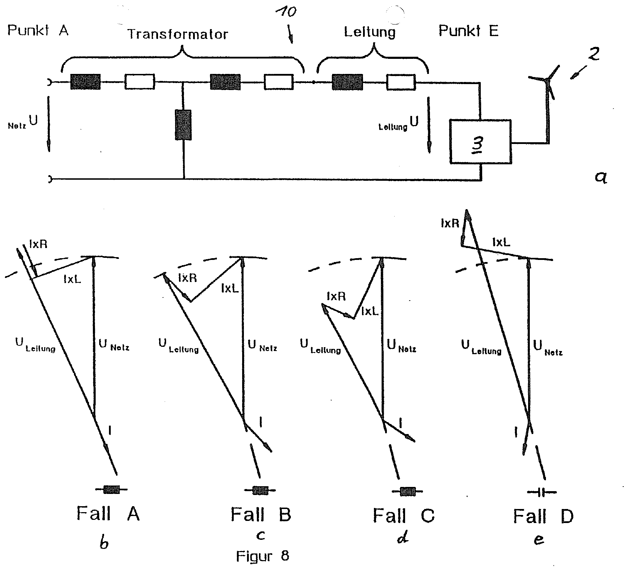

In Fig. 8a ist ein Ersatzschaltbild gezeigt, wonach der elektrische Generator 3 der Windenergieanlage 2 über eine Leitung und einen Transformator an ein (nicht näher dargestelltes) elektrisches Netz angeschlossen ist, bei welchem es sich üblicherweise um ein starres Netz handelt. In den Fig. 8b bis e sind Zeigerdiagramme zu verschiedenen Betriebszuständen dargestellt. Im Fall A gemäß Fig. 8b speist der Generator 3 der Windenergieanlage 2 nur Wirkleistung in das elektrische Netz 10; man erkennt sofort, dass die Spannung U_{Leitung} am Einspeisespunkt/Punkt E höher ist als die Spannung U_{Netz} am Punkt A. Im Fall B gemäß Fig. 8c wird ein Anteil an induktiver Blindleistung zusätzlich zur Wirkleistung eingespeist, und man erkennt, dass die Spannungen U_{Leitung} und U_{Netz} am Ende gemäß Punkt E und am Anfang gemäß Punkt A gleich groß sind. Der Fall C gemäß Fig. 8d zeigt demgegenüber, dass zuviel induktive Blindleistung eingespeist wird; dies hat zur Folge, dass die Spannung U_{Leitung} am Punkt E zu niedrig wird. Der Fall D gemäß Fig. 8e zeigt die Situation, wenn überhöhte kapazitive Blindleistung eingespeist wird; folglich steigt die Spannung U_{Leitung} am Einspeisepunkt/Punkt E gegenüber der Spannung U_{Netz} sehr stark an. Letzteres muss unbedingt vermieden werden.

Zur Blindleistungskompensation wird ein (nicht dargestellter) Wechselrichter zwischen dem Generator 3 und dem Punkt E gemäß Fig. 8a geschaltet. Die Funktion eines solchen Wechselrichters besteht nun darin, exakt einem vorgegebenem Spannungswert zu folgen, indem der cos ϕ des Ausgangsstromes entsprechend schnell und dynamisch geregelt wird.

Außerdem treten im elektrischen Netz Oberschwingungsblindleistungen auf. Immer mehr elektrische Verbraucher nämlich benötigen einen Strom, der Oberschwingungen enthält, oder erzeugen im elektrischen Netz Oberschwingungen, wie z.B. Fernsehgeräte, die am Eingang einen Gleichrichter besitzen, oder Industriebetriebe, die geregelte Stromrichter-Antriebe betreiben. Fig. 4 zeigt einen Fall, bei dem Oberschwingungsblindleistung benötigt wird. Der Spannungsverlauf U ist nahezu sinusförmig, während der Strom I neben der Grundschwingung auch noch Oberschwingungen enthält. Deutlich zu erkennen ist hier die fünfte Oberschwingung. Fig. 5 zeigt die benötigte fünfte Oberschwingung als separaten Anteil In des Stromes I.

Solche Oberschwingungen im Stromverlauf (Stromoberschwingungen) verursachen im elektrischen Netz Spannungsoberschwingungen, die die Qualität der Spannung im elektrischen Netz beeinträchtigen. Es ist daher erforderlich, auch solche Oberschwingungsblindleistungen zu kompensieren.

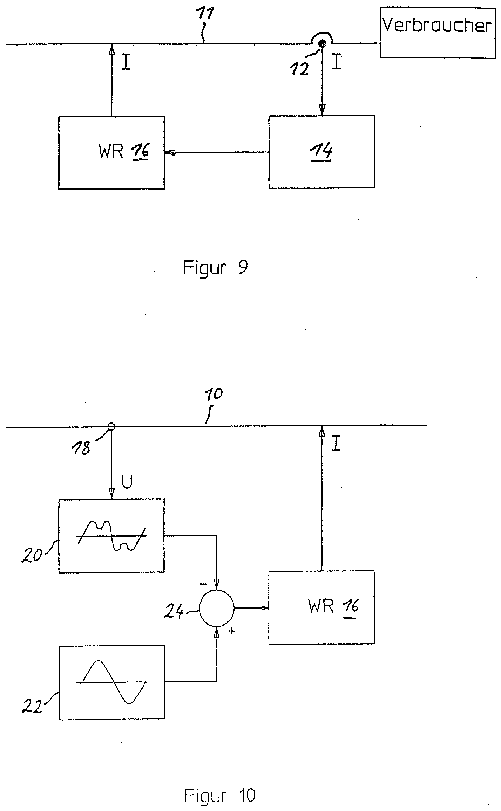

In Fig. 9 ist schematisch eine Stichleitung 11 dargestellt, die mit ihrem einen (gemäß Fig. 9 linken) Ende an ein (nicht dargestelltes) elektrisches Netz angeschlossen ist und an deren anderem (gemäß Fig. 9 rechtem) Ende Verbraucher 6 angeschlossen sind. Eine solche Stichleitung 11 kann beispielsweise ein Industriegelände oder ein oder mehrere Dörfer mit elektrischem Strom versorgen. Der zu den Verbrauchern 6 fließende Strom wird mit Hilfe eines Stromwandlers 12 gemessen. Das Messsignal des Stromwandlers 12 wird an eine Auswertungsschaltung 14 übermittelt, die kontinuierlich on-line analysiert, welche Stromoberschwingungen im Strom auf der Stichleitung 11 enthalten sind. Dieses Messergebnis dient als Sollwert, der als Ausgangssignal einem Wechselrichter 16 zugeführt wird, der dann im Wesentlichen zeitgleich die benötigten Oberschwingungen erzeugt und vor dem Stromwandler 12 in die elektrische Stichleitung 11 einspeist. Damit wird sichergestellt, dass die benötigte Oberschwingungsblindleistung zur Kompensation der im elektrischen Netz vorhandenen Oberschwingungsblindleistung vom Wechselrichter 16 erzeugt wird und nicht aus dem elektrischen Netz entnommen wird.

In Fig. 10 ist schematisch das elektrische Netz 10 gezeigt, deren Spannung mit Hilfe eines Spannungswandlers 18 gemessen wird. Das Messsignal des Spannungswandlers 18 wird einer Auswerteeinrichtung 20 zugeführt. Ferner ist eine Sollwerteinrichtung 22 vorgesehen, die den gewünschten Spannungsverlauf vorgibt. Das Ausgangssignal der Auswerteeinrichtung 20 wird von einer Subtrahiereinrichtung 24 vom Ausgangssignal der Sollwerteinrichtung 22 abgezogen und das daraus resultierende DifferenzAusgangssignal der Subtrahiereinrichtung 24 wird dem Wechselrichter 10 zugeführt, der dann im wesentlichen zeitgleich die benötigten Oberschwingungen erzeugt, um die Oberschwingungsblindleistung im elektrischen Netz zu kompensieren. Bei dieser Anordnung wird also die Netzspannung mit Hilfe des Spannungswandlers 18 gemessen, und es wird in der Auswerteeinrichtung 20 festgestellt, welche Oberschwingungen im Spannungsverlauf enthalten sind. Die Oberschwingungsströme im elektrischen Netz 10 erzeugen nämlich an der Netzimpedanz Spannungsabfälle entsprechend ihrer Frequenz und Amplitude. Die so gemessenen und berechneten Werte werden dem Wechselrichter 16 als Strom-Sollwerte vorgegeben. Der Wechselrichter 16 erzeugt dann entsprechend der Sollwerte die Stromoberschwingungen mit den benötigten Frequenzen, Amplituden und Phasenlagen.

## Patentansprüche

1. Verfahren zur Blindleistungsregelung in einem elektrischen Netz (10), bei welchem elektrische Leistung von einem, vorzugsweise vom Rotor einer Windenergieanlage (2) angetriebenen, elektrischen Generator (3) erzeugt und mit Hilfe einer zwischen Generator (3) und Netz (10) vorgesehenen Kompensationseinrichtung (16) zur Kompensation von Blindleistung entsprechend moduliert wird, wobei die Kompensationseinrichtung (16) ein Wechselrichter ist, welcher so geregelt wird, dass die an einen Verbraucher (6) abgegebene elektrische Leistung einen Blindleistungsanteil aufweist, der hinsichtlich seiner Phase, Amplitude und/oder Frequenz an den Verbraucher (6) derart angepasst ist, um die Blindleistung in dem Verbraucher (6) zu kompensieren, **dadurch gekennzeichnet, dass** mit dem Wechselrichter die Spannung am Einspeisepunkt (E) des Netzes geregelt wird, wobei die Spannung des Netzes (10) mit Hilfe eines Spannungswandlers (18) gemessen wird, das Messsignal des Spannungswandlers (18) eine Auswerteeinrichtung (20) zugeführt wird, dass ferner eine Sollwerteinrichtung (22) vorgesehen ist, die den gewünschten Spannungsverlauf vorgibt und das Ausgangssignal der Auswerteeinrichtung (20) mittels einer Substrahiereinrichtung (24) vom Ausgangssignal der Sollwerteinrichtung (22) abgezogen und das daraus resultierende Differenzausgangssignal der Substrahiereinrichtung (24) dem Wechselrichter (16) zugeführt wird, der dann die benötigten Oberschwingungen erzeugt, um die Oberschwingungsblindleistung im elektrischen Netz zu kompensieren.

2. Verfahren nach Anspruch 1,
**dadurch gekennzeichnet, dass** die Kompensationseinrichtung (16) so geregelt wird, dass der elektrische Generator (3) kapazitive Blindleistung erzeugt, um die induktive Blindleistung im Verbraucher (6) zu kompensieren.

3. Verfahren nach Anspruch 1 oder 2,
**dadurch gekennzeichnet, dass** die abgegebene elektrische Leistung eine Frequenz aufweist, die der Frequenz des Verbrauchers (6) entspricht oder ein Vielfaches der Verbraucherfrequenz darstellt.

4. Verfahren nach mindestens einem der Ansprüche 1 bis 3,
**dadurch gekennzeichnet, dass** die Kompensationseinrichtung (16) die Spannungs- und/oder Stromverläufe im elektrischen Netz (10), vorzugsweise am Einspeisepunkt (E), misst und in Abhängigkeit von den Messergebnissen den Blindleistungsanteil in der vom elektrischen Generator (3) erzeugten elektrischen Leistung regelt.

5. Verfahren nach mindestens einem der Ansprüche 1 bis 4,
**dadurch gekennzeichnet, dass** die vom elektrischen Generator (3) erzeugte Spannung unter entsprechender Anpassung des Blindleistungsanteiles in der an den Verbraucher (6) abgegebenen elektrischen Leistung im Wesentlichen auf einem vorgegebenen Sollwert geregelt wird.

6. Verfahren nach Anspruch 5,
**dadurch gekennzeichnet, dass** die Anpassung des Blindleistungsanteiles durch entsprechende Steuerung des Leistungsfaktors (cosϕ) oder der Phase des von dem elektrischen Generator (3) abgegebenen Stromes stattfindet.

7. Verfahren nach Anspruch 5 oder 6, bei welchem der elektrische Generator (3) über eine Leitung und/oder einen Transformator an ein elektrisches Netz angeschlossen ist,
**dadurch gekennzeichnet, dass** die vom elektrischen Generator (3) erzeugte Spannung so geregelt wird, dass deren Betrag in der Größenordnung des Betrages der Netzspannung liegt oder diesem entspricht.

8. Vorrichtung zur Erzeugung elektrischer Energie in einem elektrischen Netz (10), mit einem, vorzugsweise vom Rotor einer Windenergieanlage (2) angetriebenen, elektrischen Generator (3), einer zwischen Generator (3) und Netz (10) vorgesehenen Kompensationseinrichtung (16) zur Kompensation von Blindleistung, die Vorrichtung umfassend eine Regelungseinrichtung (14; 20, 22, 24), die die Kompensationseinrichtung (16), welche als Wechselrichter ausgebildet ist, so regelt, dass die an einen Verbraucher (6) abgegebene elektrische Leistung einen Blindleistungsanteil aufweist, der hinsichtlich seiner Phase, Amplitude und/oder Frequenz an den Verbraucher (6) angepasst ist, um Blindleistung in dem Verbraucher (6) zu kompensieren **dadurch gekennzeichnet, dass** mit dem Wechselrichter die Spannung am Einspeisepunkt (E) des Netzes regelbar ist, wobei die Spannung des Netztes (10) mit Hilfe eines Spannungswandlers (18) messbar ist, das Messsignal des Spannungswandlers (18) eine Auswerteeinrichtung (20) zuführbar ist, dass ferner eine Sollwerteinrichtung (22) vorgesehen ist, die den gewünschten Spannungsverlauf vorgibt und das Ausgangssignal der Auswerteeinrichtung (20) mittels einer Substrahiereinrichtung (24) vom Ausgangssignal der Sollwerteinrichtung (22) abgezogen und das daraus resultierende Differenzausgangssignal der Substrahiereinrichtung (24) dem Wechselrichter (16) zugeführt wird, der dann die benötigten Oberschwingungen erzeugt, um die Oberschwingungsblindleistung im elektrischen Netz zu kompensieren.

9. Vorrichtung nach Anspruch 8,
**dadurch gekennzeichnet, dass** die Regelungseinrichtung (14; 20, 22, 24) die Kompensationseinrichtung (16) so regelt, dass der elektrische Generator (3) kapazitive Blindleistung derart erzeugt, um die induktive Blindleistung im Verbraucher (6) zu kompensieren.

10. Vorrichtung nach Anspruch 8 oder 9,
**dadurch gekennzeichnet, dass** die abgegebene elektrische Leistung eine Frequenz aufweist, die der Frequenz des Verbrauchers (6) entspricht und ein Vielfaches der Verbraucherfrequenz darstellt.

11. Vorrichtung nach mindestens einem der Ansprüche 8 bis 10,
**dadurch gekennzeichnet, dass** die Regelungseinrichtung (14; 20, 22, 24) eine Messeinrichtung (12; 18) zur Erfassung der Spannungs- und/oder Stromverläufe im elektrischen Netz (10), vorzugsweise am Einspeisepunkt, aufweist.

12. Vorrichtung nach Anspruch 11,
**dadurch gekennzeichnet, dass** die Regelungseinrichtung (14; 20, 22, 24) in Abhängigkeit von den Messergebnissen der Messeinrichtung (12; 18) den Wechselrichter (16) steuert.

13. Vorrichtung nach mindestens einem der Ansprüche 8 bis 12,
**dadurch gekennzeichnet, dass** die Regelungseinrichtung (14; 20, 22, 24) die vom elektrischen Generator (3) erzeugte Spannung durch Steuerung des Blindleistungsanteiles in der an den Verbraucher (6) abgegebenen elektrischen Leistung im Wesentlichen auf einen vorgegebenen Sollwert regelt.

14. Vorrichtung nach Anspruch 13,
**dadurch gekennzeichnet, dass** die Regelungseinrichtung (14; 20, 22, 24) die Anpassung des Blindleistungsanteiles durch entsprechende Steuerung des Leistungsfaktors (cosφ) oder der Phase des vom elektrischen Generator (3) abgegebenen Stromes vornimmt.

15. Vorrichtung nach Anspruch 13 oder 14, bei welcher der elektrische Generator (3) über eine Leitung und/oder einen Transformator an ein elektrisches Netz angeschlossen ist,
**dadurch gekennzeichnet, dass** die Regelungseinrichtung die vom elektrischen Generator (3) erzeugte Spannung so regelt, dass deren Betrag in der Größenordnung des Betrages der letzten Spannung liegt oder diesem entspricht.

## Claims

1. A method of reactive-power regulation in an electrical network (10), in which electric power is generated by an electric generator (3) preferably driven by the rotor of a wind energy plant (2) and is appropriately modulated with the aid of a compensation device (16) provided between the generator (3) and the network (10) for the compensation of reactive power,
wherein the compensation device (16) is an inverter which is regulated such that the electric power delivered to a consumer (6) has a reactive-power component which is adapted with respect to its phase, amplitude and/or frequency to the consumer (6) to compensate for the reactive power in the consumer (6), **characterised in that** the voltage at the feed-in point (E) of the network is regulated with the inverter, wherein the voltage of the network (10) is measured with the aid of a voltage transformer (18), the measurement signal of the voltage transformer (18) is fed to an evaluation device (20), **in that** further a reference-value device (22) is provided which predetermines the desired voltage characteristic and the output signal of the evaluation device (20) is deducted by means of a subtracting device (24) from the output signal of the reference-value device (22) and the difference output signal, resulting therefrom, of the subtracting device (24) is fed to the inverter (16), which then produces the required harmonics in order to compensate for the harmonic reactive power in the electrical network.

2. A method according to Claim 1,
**characterised in that** the compensation device (16) is regulated in such a way that the electric generator (3) generates capacitive reactive power in order to compensate for the inductive reactive power in the consumer (6).

3. A method according to Claim 1 or 2,
**characterised in that** the electric power delivered is of a frequency which corresponds to the frequency of the consumer (6) or represents a multiple of the consumer frequency.

4. A method according to at least one of Claims 1 to 3,
**characterised in that** the compensation device (16) measures the voltage and/or current characteristics in the electrical network (10), preferably at the feed-in point (E), and, in dependence on the measurement results, regulates the reactive-power component in the electric power generated by the electric generator (3).

5. A method according to at least one of Claims 1 to 4,
**characterised in that** the voltage generated by the electric generator (3) is regulated substantially to a predetermined reference value with appropriate adaptation of the reactive-power component in the electric power delivered to the consumer (6).

6. A method according to Claim 5,
**characterised in that** the adaptation of the reactive-power component is effected by appropriate control of the power factor (cos ϕ) or the phase of the current delivered by the electric generator (3).

7. A method according to Claim 5 or 6, in which the electric generator (3) is connected to an electrical network by way of a line and/or a transformer, **characterised in that** the voltage generated by the electric generator (3) is regulated in such a way that the amount thereof is in the order of magnitude of the amount of the network voltage or corresponds thereto.

8. An apparatus for generating electrical energy in an electrical network (10), with an electric generator (3) preferably driven by the rotor of a wind energy plant (2) [and] a compensation device (16) provided between the generator (3) and the network (10) for the compensation of reactive power, the apparatus comprising
a regulating device (14; 20, 22, 24) which regulates the compensation device (16), which is formed as an inverter, in such a way that the electric power delivered to a consumer (6) has a reactive-power component which is adapted in respect of its phase, amplitude and/or frequency to the consumer (6) to compensate for reactive power in the consumer (6), **characterised in that** the voltage at the feed-in point (E) of the network can be regulated with the inverter, wherein the voltage of the network (10) can be measured with the aid of a voltage transformer (18), the measurement signal of the voltage transformer (18) can be fed to an evaluation device (20), **in that** further a reference-value device (22) is provided which predetermines the desired voltage characteristic and the output signal of the evaluation device (20) is deducted by means of a subtracting device (24) from the output signal of the reference-value device (22) and the difference output signal, resulting therefrom, of the subtracting device (24) is fed to the inverter (16), which then produces the required harmonics in order to compensate for the harmonic reactive power in the electrical network.

9. An apparatus according to Claim 8,
**characterised in that** the regulating device (14; 20, 22, 24) regulates the compensation device (16) in such a way that the electric generator (3) generates capacitive reactive power in order to compensate for the inductive reactive power in the consumer (6).

10. An apparatus according to Claim 8 or 9,
**characterised in that** the electric power delivered is of a frequency which corresponds to the frequency of the consumer (6) and represents a multiple of the consumer frequency.

11. An apparatus according to at least one of Claims 8 to 10,
**characterised in that** the regulating device (14; 20, 22, 24) has a measuring device (12; 18) for detecting the voltage and/or current characteristics in the electrical network (10), preferably at the feed-in point.

12. An apparatus according to Claim 11,
**characterised in that** the regulating device (14; 20, 22, 24) controls the inverter (16) in dependence on the measurement results of the measuring device (12; 18).

13. An apparatus according to at least one of Claims 8 to 12,
**characterised in that** the regulating device (14; 20, 22, 24) regulates the voltage generated by the electric generator (3) substantially to a predetermined reference value by control of the reactive-power component in the electric power delivered to the consumer (6).

14. An apparatus according to Claim 13,
**characterised in that** the regulating device (14; 20, 22, 24) effects the adaptation of the reactive-power component by suitable control of the power factor (cos ϕ) or the phase of the current delivered by the electric generator (3).

15. An apparatus according to Claim 13 or 14, in which the electric generator (3) is connected to an electrical network by way of a line and/or a transformer, **characterised in that** the regulating device regulates the voltage generated by the electric generator (3) in such a way that the amount thereof is in the order of magnitude of the amount of the last voltage or corresponds thereto.

## Revendications

1. Procédé servant à réguler une puissance réactive dans un réseau (10) électrique, où la puissance électrique est produite par un générateur (3) électrique, entraîné de préférence par le rotor d'une éolienne (2), et est modulée de manière correspondante à l'aide d'un système de compensation (16) prévu entre le générateur (3) et le réseau (10), servant à compenser une puissance réactive,
dans lequel le système de compensation (16) est un onduleur, lequel est régulé de telle sorte que la puissance électrique distribuée à un consommateur (6) présente une fraction de puissance réactive, dont la phase, l'amplitude et/ou la fréquence sont adaptées au consommateur (6) de manière à compenser la puissance réactive dans le consommateur (6), **caractérisé en ce que**
la tension au niveau du point d'injection (E) du réseau est régulée avec l'onduleur, dans lequel la tension du réseau (10) est mesurée à l'aide d'un convertisseur de tension (18), le signal de mesure du convertisseur de tension (18) est amené à un dispositif d'évaluation (20), et qu'en outre est prévu un système de valeur théorique (22), qui spécifie la variation de tension souhaitée, et le signal de sortie du système d'évaluation (20) est prélevé au moyen d'un système de soustraction (24) du signal de sortie du système de valeur théorique (22), et le signal de sortie différentiel en résultant du système de soustraction (24) est amené à l'onduleur (16), qui génère alors les harmoniques nécessaires pour compenser la puissance réactive d'harmonique dans le réseau électrique.

2. Procédé selon la revendication 1,
**caractérisé en ce que** le système de compensation (16) est régulé de telle sorte que le générateur (3) électrique produit une puissance réactive capacitive pour compenser la puissance réactive inductive dans le consommateur (6).

3. Procédé selon la revendication 1 ou 2,
**caractérisé en ce que** la puissance électrique distribuée présente une fréquence, qui correspond à la fréquence du consommateur (6) ou représente un multiple de la fréquence de consommateur.

4. Procédé selon au moins l'une quelconque des revendications 1 à 3,
**caractérisé en ce que** le système de compensation (16) mesure les variations de tension et/ou de courant dans le réseau (10) électrique, de préférence au niveau du point d'injection (E), et régule en fonction des résultats de mesure la fraction de puissance réactive dans la puissance électrique produite par le générateur (3) électrique.

5. Procédé selon au moins l'une quelconque des revendications 1 à 4,
**caractérisé en ce que** la tension produite par le générateur (3) électrique est régulée, en adaptant de manière correspondante la fraction de puissance réactive dans la puissance électrique distribuée au consommateur (6), sensiblement à une valeur théorique spécifiée.

6. Procédé selon la revendication 5,
**caractérisé en ce que** l'adaptation de la fraction de puissance réactive a lieu par une commande correspondante du facteur de puissance (cosϕ) ou de la phase du courant distribué par le générateur (3) électrique.

7. Procédé selon la revendication 5 ou 6, où le générateur (3) électrique est raccordé à un réseau électrique par l'intermédiaire d'une ligne et/ou d'un transformateur,
**caractérisé en ce que** la tension produite par le générateur (3) électrique est régulée de telle sorte que sa valeur est de l'ordre de grandeur de la valeur de la tension de réseau ou correspond à celle-ci.

8. Dispositif servant à produire de l'énergie électrique dans un réseau (10) électrique avec un générateur (3) électrique, entraîné de préférence par le rotor d'une éolienne (2), un système de compensation (16) prévu entre le générateur (3) et le réseau (10) aux fins de la compensation de la puissance réactive,
le dispositif comprenant
un système de régulation (14 ; 20, 22, 24), qui régule le système de compensation (16), lequel est réalisé en tant qu'onduleur, de telle sorte que la puissance électrique distribuée à un consommateur (6) présente une fraction de puissance réactive, dont la phase, l'amplitude et/ou la fréquence sont adaptées au consommateur (6) pour compenser la puissance réactive dans le consommateur (6), **caractérisé en ce que**
la tension au niveau du point d'injection (E) du réseau peut être régulée avec l'onduleur, dans lequel la tension du réseau (10) peut être mesurée à l'aide d'un convertisseur de tension (18), le signal de mesure du convertisseur de tension (18) peut être amené au système d'évaluation (20), qu'en outre est prévu un système de valeur théorique (22), qui spécifie la variation de tension souhaitée et le signal de sortie du système d'évaluation (20) est prélevé au moyen d'un système de soustraction (24) du signal de sortie du système de valeur théorique (22) et le signal de sortie différentiel en résultant du système de soustraction (24) est amené à l'onduleur (16), qui génère alors les harmoniques nécessaires pour compenser la puissance réactive d'harmonique dans le réseau électrique.

9. Dispositif selon la revendication 8,
**caractérisé en ce que** le système de régulation (14 ; 20, 22, 24) régule le système de compensation (16) de telle sorte que le générateur (3) électrique produit une puissance réactive capacitive de manière à compenser la puissance réactive inductive dans le consommateur (6).

10. Dispositif selon la revendication 8 ou 9,
**caractérisé en ce que** la puissance électrique distribuée présente une fréquence, qui correspond à la fréquence du consommateur (6) et représente un multiple de la fréquence de consommateur.

11. Dispositif selon au moins l'une quelconque des revendications 8 à 10,
**caractérisé en ce que** le système de régulation (14 ; 20, 22, 24) présente un système de mesure (12 ; 18) servant à détecter les variations de tension et/ou de courant dans le réseau (10) électrique, de préférence au niveau du point d'injection.

12. Dispositif selon la revendication 11,
**caractérisé en ce que** le système de régulation (14 ; 20, 22, 24) commande l'onduleur (16) en fonction des résultats de mesure du système de mesure (12 ; 18).

13. Dispositif selon au moins l'une quelconque des revendications 8 à 12,
**caractérisé en ce que** le système de régulation (14 ; 20, 22, 24) régule la tension produite par le générateur (3) électrique en commandant la fraction de puissance réactive dans la puissance électrique distribuée au consommateur (6) sensiblement à une valeur théorique spécifiée.

14. Dispositif selon la revendication 13,
**caractérisé en ce que** le système de régulation (14 ; 20, 22, 24) réalise l'adaptation de la fraction de puissance réactive en commandant de manière correspondante le facteur de puissance (cosϕ) ou la phase du courant distribué par le générateur (3) électrique.

15. Dispositif selon la revendication 13 ou 14, où le générateur (3) électrique est raccordé à un réseau électrique par l'intermédiaire d'une ligne et/ou d'un transformateur,
**caractérisé en ce que** le système de régulation régule la tension produite par le générateur (3) électrique de telle sorte que sa valeur est de l'ordre de grandeur de la valeur de la dernière tension ou correspond à celle-ci.
